# EUROPEAN PATENT SPECIFICATION

(11) **EP 3 654 732 B1**
(45) Date of publication and mention of the grant of the patent: **24.08.2022**
(21) Application number: 19191543.8
(22) Date of filing: 13.08.2019
(51) Int. Cl.: H05B 3/84, H05B 1/02, B60S 1/02

(54) **HEATING APPARATUS FOR WINDOW GLASS OF VEHICLE**
HEIZVORRICHTUNG FÜR FENSTERSCHEIBEN VON FAHRZEUGEN
APPAREIL DE CHAUFFAGE POUR VITRE DE FENÊTRE DE VÉHICULE

(30) Priority: 19.11.2018 JP 2018216283
(43) Date of publication of application: 20.05.2020
(73) Proprietor: TOYOTA JIDOSHA KABUSHIKI KAISHA, Toyota-shi, Aichi-ken 471-8571 (JP)
(72) Inventor: ADACHI, Takahiro, Toyota-shi, Aichi-ken 471-8571 (JP); MIYADO, Takahiro, Toyota-shi, Aichi-ken 471-8571 (JP); MURASATO, Hideyuki, Toyota-shi, Aichi-ken 471-8571 (JP)
(74) Representative: J A Kemp LLP

(56) References cited:
- EP-A1- 3 355 661
- DE-A1-102010 052 472
- DE-A1-102013 220 271
- DE-A1-102014 006 924
- US-A1- 2013 075 383

## Description

### BACKGROUND OF THE INVENTION

### 1. Field of the Invention

The present invention relates to a heating apparatus of a vehicle window glass, which heats a part of the window glass in order to remove ice adhering to "a part of the window glass located at a position corresponding to an imaging/shooting range of an onboard camera".

### 2. Description of the Related Art

A preventive safety system such a pre-crash safety system (PCS) detects an obstacle (or object) using a camera attached to a vehicle. Hereinafter, the camera attached to the vehicle is referred to as an "onboard camera". The onboard camera is disposed/arranged in a vehicle cabin so as to face an upper part of the front window glass (windshield) of the vehicle around the middle of the front window glass in a vehicle width direction. The onboard camera photographs (takes an image of) views/landscapes and the obstacle(s)/object(s) in front (ahead) of the vehicle from the vehicle cabin through the front window glass.

Incidentally, when dew condensation occurs on "an inner surface of a part (referred to as a "specific glass part" in some cases) of the window glass located at the position corresponding to the imaging/shooting range of the onboard camera, the onboard camera is unable to properly/clearly photograph (take a picture of) the views/landscapes around the vehicle and the obstacle around the vehicle.

In view of the above, each of apparatuses, which have been conventionally proposed, is configured to heat the specific glass part with a heater to thereby prevent occurrence of the dew condensation on the specific glass part (for example, refer to Japanese Patent Application Laid-Open No. 2017-206080 and Japanese Patent Application Laid-Open No. 2017-185896). DE 10 2010 052 472 A1 discloses an arrangement for an image recording device in a vehicle having an image recording device for recording image data. The arrangement includes a carrier part which can be positioned on the vehicle with the front side of the carrier part on or in front of the inside of a vehicle window, retaining elements for retaining the image recording device, the retaining elements are coupled to the carrier part in such a way that the optical recording axis of the image recording device is directed into an area in front of the front side of the carrier part, and a heating device, the heating device designed in such a way that the thermal radiation produced by the heating device in the direction of the area in front of the front side of the carrier part is determined. Also disclosed is a method for controlling the heating device in such an arrangement.

A case may occur where moisture (water) in air or snow becomes ice and the ice adheres to an outside surface of the front window glass. If the ice has adhered to an outside surface of the specific glass part, the onboard camera is no longer able to properly/clearly photograph the views/landscapes around the vehicle and the obstacles around the vehicle. Therefore, it is necessary to melt and remove such ice adhering to the outside surface of the specific glass part.

However, in order to melt such ice by heating the whole/entire specific glass part with the heater, a very large amount of energy is required/consumed. In particular, since the onboard camera capable of detecting the obstacle/object present within a relatively wide range has a large angle of view, an area of the specific glass part is very large, and therefore, more energy is consumed to melt the ice adhering to the outside surface of the specific glass part.

The invention is defined in appended claim 1. Further aspects and preferred embodiments are defined in the dependent claims. Any aspects, embodiments and examples of the present disclosure which do not fall under the scope of the appended claims do not form part of the invention and are provided for illustrative purposes.

### SUMMARY OF THE INVENTION

The present invention has been made in order to solve the above-described problem. That is, one of objects of the present invention is to provide "a heating apparatus of a window glass (i.e., vehicle window glass) of a vehicle" capable of removing ice adhering to a "particular part corresponding to the shooting range of the onboard camera (i.e., part of the window glass located at the position corresponding to the shooting range (or imaging/photographing scope) of the onboard camera) with less energy consumption. Hereinafter, the heating apparatus according to the present invention is also referred to as the "present invention heating apparatus".

The present invention heating apparatus comprises a heater (40, 90, 100) configured to generate heat for melting ice adhering to an imaging glass part (FGC) which includes a whole of a particular part of the window glass, the particular part corresponding to the shooting range of the onboard camera (30) which is disposed in an interior space of the vehicle (10) and photographs an outside of the vehicle through the window glass (from the interior space of the vehicle). The above-described imaging glass part may or may not completely match with a whole of the particular part corresponding to the shooting range.

When and after an upstream specific part within the imaging glass part is heated (wherein the upstream specific part is located upstream in a liquid flowing direction in which liquid flows on a surface outside a vehicle cabin of the imaging glass part), the ice adhering to that upstream specific part melts so as to become water. The water flows to a part (part other than the upper specific part) located downstream of the specific upper part. Since a temperature of that flowing water is higher than that of the ice, that flowing water melts "ice adhering to the part located downstream of the specific upper part" with or without applying a little amount heat to that ice from the heater.

In view of the above, the heater of the present invention heating apparatus is configured to heat the imaging glass part in such a manner that a heat amount per unit area of heat applied to an upstream specific part (one of FGC1 and FGC2) of the imaging glass part is greater than a heat amount per unit area of heat applied to a downstream part (the other of FGC1 and FGC2) of the imaging glass part, the upstream specific part being located upstream in an liquid flowing direction in which liquid flows on a surface outside a vehicle cabin of the imaging glass part, and the downstream part being located downstream of the upstream specific part in the liquid flowing direction.

Therefore, the present heating apparatus can melt the ice adhering to the upstream specific part and the downstream part with less energy consumption as compared with a conventional apparatus which heats those parts uniformly/evenly (i.e., with the amount of heat per unit area equally supplied to each of those parts) to melt the ice adhering to those parts. Accordingly, the present heating apparatus can remove the ice on the imaging glass part with less energy consumption as compared with the conventional apparatus.

In one of aspects of the present heating apparatus,
the heater is configured to heat, at least when the vehicle is not moving, a whole or a part of an upper part, as the upstream specific part, wherein the imaging glass part is divided into two parts in a vertical direction along the window glass, and the divided two parts includes the upper part and a lower part.

According to the above-mentioned aspect, when the vehicle is not moving (i.e., is stopped), the whole or the part of the upper part is heated as the upstream specific part. Therefore, the ice adhering to the outside surface of the upper part is melted and becomes water. When the vehicle is not moving, the water into which the ice has been changed flows downward. Therefore, the ice adhering to the lower part is easily melted due to that water.

In one of aspects of the present heating apparatus,
the heater is configured to be capable of heating a whole of the particular part (i.e., the particular part corresponding to the shooting range of the onboard camera).

According to the above-mentioned aspect, the heater can heat the whole of the particular part corresponding to the shooting range of the onboard camera. Thus, the above-mentioned aspect can remove cloud/fog of "a surface on the vehicle cabin side" of the whole of the particular part. Furthermore, the heat can be applied to the ice adhering to the part downstream of the specific upstream part not only from the water flowing from the specific upstream part but also from the heater directly. Therefore, the above-mentioned aspect can remove the ice adhering to a main part of the outside surface of the imaging glass part with less energy consumption and in a shorter period of time.

In one of aspects of the present heating apparatus,
the heater is closely attached to (or is in close contact with) a vehicle cabin side surface (inside surface) of a whole of the particular part corresponding to the shooting range of the onboard camera.

According to the above-mentioned aspect, since the heater is in close contact with the vehicle cabin side surface (surface on the vehicle cabin side) of the whole part of the particular part corresponding to the shooting range of the onboard camera, the heat generated by the heater is efficiently transmitted to the whole part. Therefore, the above-mentioned aspect can more efficiently remove the ice adhering to a main part of the outside surface of the imaging glass part with less energy consumption.

In one of aspects of the present heating apparatus,
the heater is disposed at a hood part which extends forward under the onboard camera in the interior space of the vehicle (or in the vehicle cabin) so as to face the imaging glass part (with a distance therebetween).

According to the above-mentioned aspect, a temperature of a space (a relatively airtight space) formed/defined by the hood part, the onboard camera, and the imaging glass part can be raised easily due to the heat supplied from the heater disposed/provided at the hood part. Therefore, the above-mentioned aspect can melt the ice adhering to the main part of the outside surface of the imaging glass part with less energy consumption and also remove the cloud/fog on the main part of the inside surface of the imaging glass part with less energy consumption.

In one of aspects of the present heating apparatus,
the heater is closely attached to (or is in contact with) a vehicle cabin side surface of a whole of the upstream specific part.

According to the above-mentioned aspect, the heat which the heater generates is directly applied to only the upstream specific part. Therefore, the above-mentioned aspect can downsize the heater.

One of aspects of the present heating apparatus further comprises a vehicle speed sensor configured to detect a vehicle speed of the vehicle, and a control unit for controlling electric power supplied to the heater. The control unit is configured to control the electric power supplied to the heater in such a manner as to:
heat a whole or a part of an upper part, as the upstream specific part, when the vehicle speed is equal to or lower than a threshold vehicle speed, wherein the imaging glass part is divided into two parts in a vertical direction along the window glass, the two parts including the upper part and a lower part; and
heat a whole or a part of the lower part, as the upstream specific part, when the vehicle speed is higher than the threshold vehicle speed.

If the above-described window glass is a front window glass of the vehicle, liquid (water) on the vehicle outside surface of the imaging glass part tends to flow from an upper side to a lower side (i.e., downward), when the vehicle speed is equal to or lower than the threshold vehicle speed so that traveling wind does not blow onto (hit) the window glass. On the other hand, when the vehicle speed is higher than the threshold vehicle speed so that the traveling wind blows onto the window glass, the liquid (water) on the vehicle outside surface of the imaging glass part tends to flow from the lower side to the upper side (i.e., upward).

In view of the above, in the above-mentioned aspect, when the vehicle speed is equal to or lower than the threshold vehicle speed, the whole or the part of the upper part is heated as the upstream specific part. Furthermore, when the vehicle speed is higher than the threshold vehicle speed, the whole or the part of the lower part is heated as the upstream specific part. Therefore, the above-mentioned aspect can melt the ice adhering to the main part of the outside surface of the imaging glass part with less energy consumption in a shorter period of time, not only when the vehicle speed is low but also when the vehicle speed is high (i.e., regardless of the vehicle speed).

In one of aspects of the present heating apparatus,
the heater is configured:
to heat the imaging glass part so that the heat applied to the imaging glass part is biased upward in the imaging glass part, when the vehicle is not moving or the vehicle is moving at a relatively low speed; and
to heat the imaging glass part so that the heat applied to the imaging glass part is biased downward in the imaging glass part, when the vehicle is moving at a relatively high speed.

### BRIEF DESCRIPTION OF THE DRAWINGS

FIG. 1 is a front view of a vehicle comprising a heating apparatus of a window glass of the vehicle (a first heating apparatus) according to a first embodiment of the present invention.
FIG. 2 is a schematic block diagram illustrating the first heating apparatus.
FIG. 3 is an oblique view of a camera housing for housing an onboard camera.
FIG. 4 is a side view of a part around the onboard camera of the vehicle equipped with the first heating apparatus.
FIG. 5A illustrates the front glass of the vehicle shown in FIG. 1 as viewed from the upper side of the vehicle.
FIG. 5B illustrates the front glass as viewed from the side of the vehicle.
FIG. 6A illustrates a configuration of the heater shown in FIG. 2.
FIG. 6B is a schematic sectional view of the heater shown in FIG. 2 cut along a line 1-1 of FIG. 6A.
FIG. 7A is a schematic sectional view of an imaging glass part, with ice adhering to the imaging glass part, which the first heating apparatus heats.
FIG. 7B is a schematic sectional view of the imaging glass part after the heater of the first heating apparatus has been energized.
FIG. 8A is a schematic sectional view of an imaging glass part, with ice adhering to the imaging glass part, which a reference heating apparatus heats.
FIG. 8B is a schematic sectional view of the imaging glass part after the heater of the reference heating apparatus has been energized.
FIG. 9 is a flowchart showing a routine executed by a CPU of a camera ECU shown in FIG. 2.
FIG. 10A is a schematic sectional view of the imaging glass part, with ice adhering to the imaging glass part, which a heating apparatus of a window glass of the vehicle (a second heating apparatus) according to a second embodiment of the present invention) heats.
FIG. 10B is a schematic sectional view of the imaging glass part after the heater of the second heating apparatus has been energized.
FIG. 11 is a front view of a heater of the second heating apparatus.
FIG. 12 is a schematic block diagram illustrating a heating apparatus of a window glass of the vehicle (a third heating apparatus) according to a third embodiment of the present invention.
FIG. 13A is a view showing a first heater shown in FIG. 12 as viewed from the front side of the vehicle.
FIG. 13B is a schematic sectional view of the first heater shown in FIG. 12 cut along a line 2-2 of FIG. 13A.
FIG. 13C is a view showing a second heater shown in FIG. 12 as viewed from the front side of the vehicle.
FIG. 14 is a flowchart showing a routine executed by a CPU of a camera ECU of the third heating apparatus.
FIG. 15A is a schematic sectional view of an imaging glass part, with ice adhering to the imaging glass part, which the third heating apparatus heats.
FIG. 15B is a schematic sectional view of the imaging glass part after the heater of the third heating apparatus has been energized.
FIG. 16A is a schematic sectional view of the imaging glass part which the heater of a first modified example of the first heating apparatus heats.
FIG. 16B is a view showing the heater shown in FIG. 16A as viewed from the front side of the vehicle.
FIG. 17A illustrates a configuration of the heater of a second modified example.
FIG. 17B illustrates a configuration of the heater of a third modified example.
FIG. 17C illustrates a configuration of the heater of a fourth modified example.
FIG. 17D illustrates a configuration of the heater of a fifth modified example.
FIG. 18A illustrates a configuration of the heater of a sixth modified example of the first heating apparatus.
FIG. 18B illustrates a configuration of the heater of a seventh modified example of the first heating apparatus.
FIG. 18C illustrates a configuration of the heater of an eighth modified example of the first heating apparatus.
FIG. 18D illustrates a configuration of the heater of a ninth modified example of the first heating apparatus.

### DETAILED DESCRIPTION OF THE EMBODIMENT

A heating apparatus of a vehicle window glass according to each of embodiments of the present invention will next be described with reference to the drawings. In all drawings illustrating the embodiments, the same or corresponding parts are denoted by the same/common reference symbols.

### <<First Embodiment>>

### <Schematic Construction>

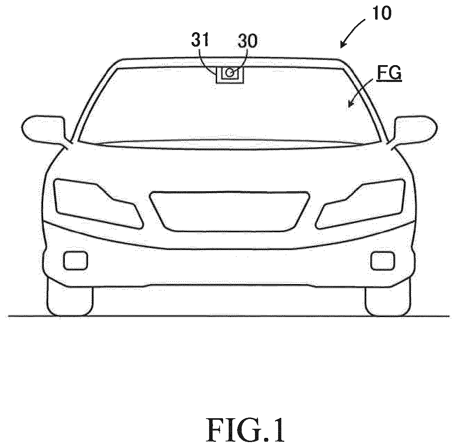

The heating apparatus of a vehicle window glass according to the first embodiment of the present invention is applied to a vehicle 10 shown in FIG. 1. Hereinafter, the heating apparatus according to the first embodiment of the present invention is referred to as a "first heating apparatus". The vehicle 10 is a vehicle having an internal combustion engine as a driving source. The vehicle 10 may be an electric vehicle or a hybrid vehicle.

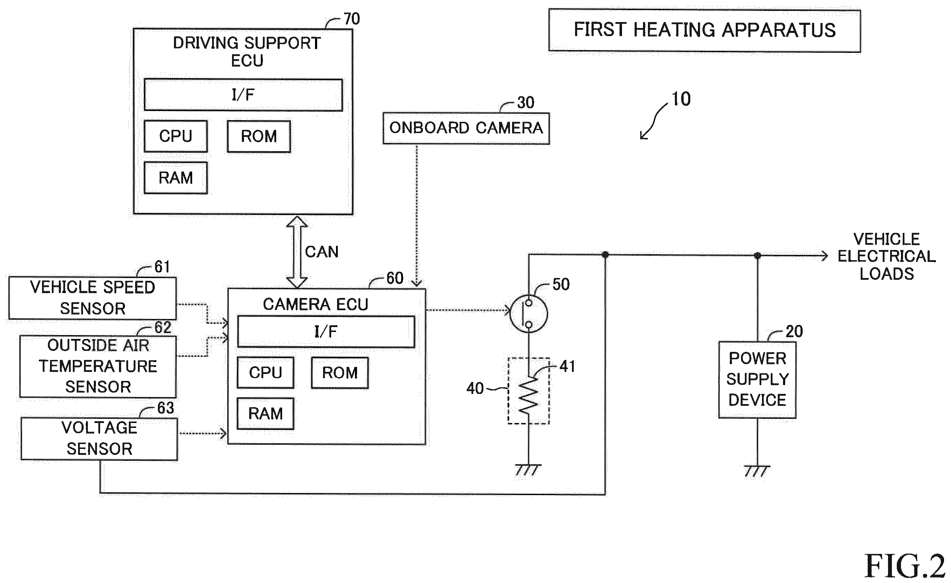

As shown in FIG. 2, the vehicle 10 comprises a power supply device 20, an onboard camera 30, a heater 40, a relay switch 50, a camera ECU 60, a driving support ECU 70.

In the present specification, each of "ECUs" is an electric control unit comprising a microcomputer as a main part. The microcomputer includes a CPU, a ROM, a RAM, a non-volatile memory, an interface I/F, and the like. The CPU realizes various functions by executing instructions (programs, routines) stored in the ROM. A certain ECU is connected with at least any one of ECUs other than the certain ECU via a CAN (Controller Area Network) in such a manner that they are capable of mutually transmitting and receiving information.

The power supply device 20 is a power source including "a battery and an alternator (not shown)". The power supply device 20 is unable to supply electric power to the heater 40 and vehicle electrical loads (electrical loads for the vehicle 10) other than the heater 40, when an ignition key switch (not shown) is positioned at an OFF position. The power supply device 20 is in a state where it is capable of supplying the electric power to the heater 40 and the vehicle electrical loads, when the ignition key switch is positioned at an ON position.

As shown in FIG. 1, the onboard camera 30 is placed in an interior space (a vehicle cabin) of the vehicle 10 and in the vicinity of a center in a vehicle width direction of a front window glass (a windshield) FG and upper position of the front window glass FG. Hereinafter, the front window glass FG may sometimes be referred to as a "glass FG". It should be noted that the installation position of the onboard camera 30 is not limited to the above-described position. For example, the onboard camera 30 may be placed in the vehicle cabin so as to face the glass FG. As will be described later in detail, every time a predetermined time elapses, the onboard camera 30 photographs (takes an image of) an outside (views/landscapes including an object outside the vehicle 10) of the vehicle 10 to generate an image data.

As will be described later in detail, the heater 40 heats a predetermined part of the glass FG, when the heater 40 is supplied with the electric power from the power supply device 20.

A state of the relay switch 50 is switched between an ON state (a conduction state) and an OFF state (a breaking state) in response to an instruction signal (a driving signal) from the camera ECU 60. When the relay switch 50 is in the conduction state, the electric power is supplied from the power supply device 20 to the heater 40. When the relay switch 50 is in the breaking state, connection between the power supply device 20 and the heater 40 is cut off, and thus, the electric power is not supplied from the power supply device 20 to the heater 40.

The camera ECU 60 is connected to the onboard camera 30 and the relay switch 50. The camera ECU 60 receives the image data generated by the onboard camera 30 to execute various processes using that received image data, such as a process for identifying the obstacle, and recognizing white lines. The camera ECU 60 transmits the instruction signal to the relay switch 50. Therefore, the camera ECU 60 can also be said to be a glass heating control unit (for convenience, also simply referred to as a "control unit" in some cases).

Furthermore, the camera ECU 60 is connected to a plurality of sensors described below and receives detection signals from those sensors.

A vehicle speed sensor 61 generates a detection signal indicative of a vehicle speed Vs of the vehicle 10. An outside air temperature sensor 62 generates the detection signal indicative of an outside air temperature Tair of an air around the vehicle 10. A voltage sensor 63 generates a detection signal indicative of an output voltage VB of the power supply device 20.

The driving support ECU 70 receives vehicle peripheral information including "information on the obstacles/objects and information on white lines" from the camera ECU 60. The driving support ECU 70 performs a well-known traveling support control based on that vehicle peripheral information. For example, the well-known traveling support control may include a well-known collision prevention control for controlling a traveling state of the vehicle 10 and generating an alarm, and a well-known lane keeping control.

### (Onboard Camera)

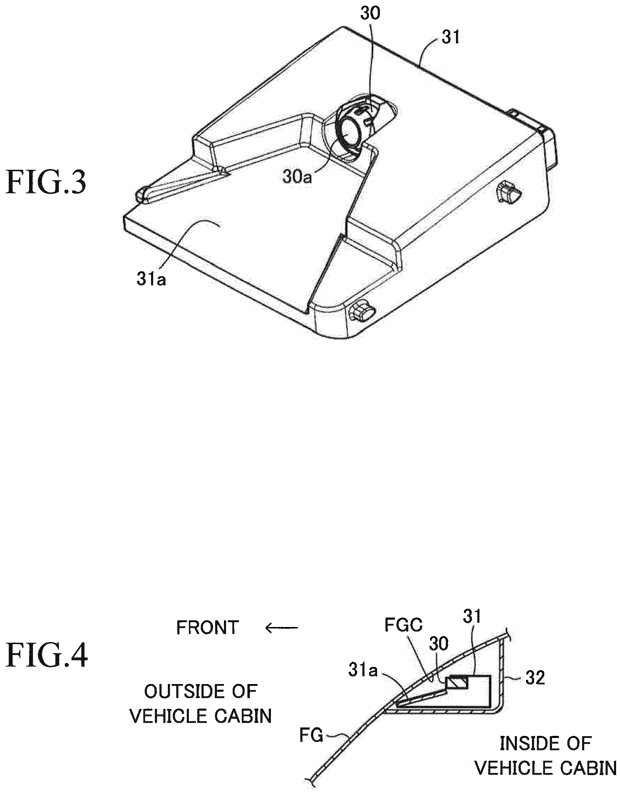

As shown in FIG. 3, the onboard camera 30 is fixed in a camera housing 31. The camera housing 31 is a substantially rectangular parallelepiped case and holds the onboard camera 30 at an upper position of the center of the camera housing 31. As shown in FIG. 4, the camera housing 31 is fixed by the bracket 32 to a position located at an upper position of the center in a vehicle width direction of the glass FG. Therefore, the onboard camera 30 is disposed at the position in the interior space of the vehicle 10 and near the glass FG.

The camera housing 31 includes a hood part 31a having a flat shape. When the camera housing 31 has been fixed to the vehicle 10, the hood part 31a extends forward under the onboard camera 30 (more specifically, the lens 30a). Therefore, the surface of the hood part 31a and the glass FG face to each other and are inclined obliquely to each other.

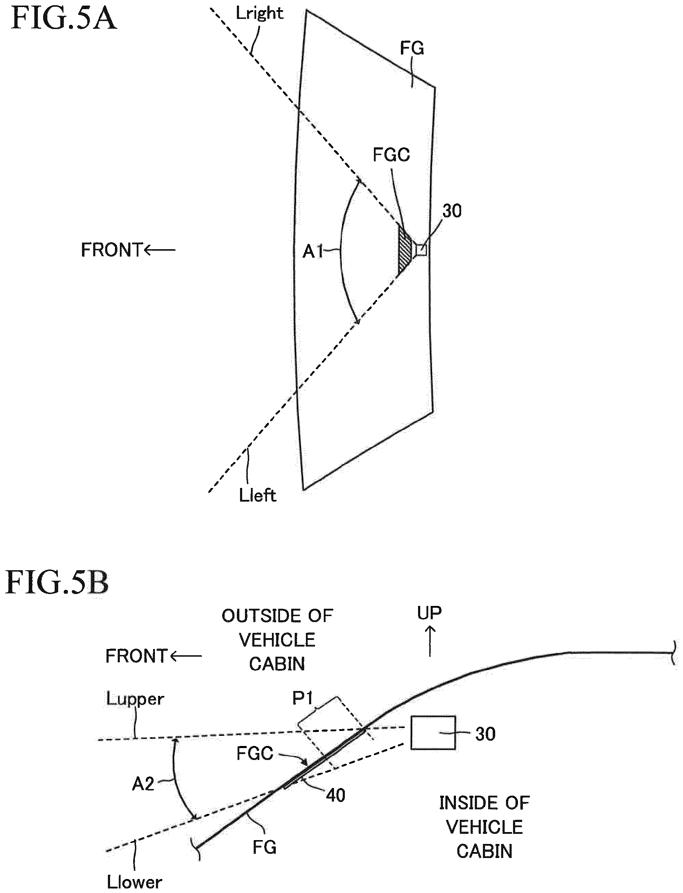

The heater 40 generates heat for melting the ice adhering to "an imaging glass part FGC shown in FIGs. 5A and 5B" and for preventing dew condensation from occurring on the imaging glass part FGC. The imaging glass part FGC is "a part of the glass FG" which corresponds to the imaging/shooting range of the onboard camera 30. Note that the imaging glass part FGC may be a part larger than (i.e, covering) "an entirety (a whole) of the part of the glass FG" which corresponds to the imaging/shooting range of the onboard camera 30.

The imaging range of the onboard camera 30 is defined by an angle A1 of view in the vehicle width direction (refer to FIG. 5A) and an angle A2 of view in a vertical direction (refer to FIG. 5B).

As shown in FIG. 5A, the angle A1 of view is an angle formed between a line Lright and a line Lleft. That is, the angle A1 is an angle of view of the onboard camera 30 when viewing the onboard camera 30 which has been fixed to the vehicle from a position located above the vehicle 10. In other words, the angle A1 is an angle of view of the onboard camera 30 in a horizontal direction.

As shown in FIG. 5B, the angle A2 of view is an angle formed between a line Lupper and a line Llower. That is, the angle A2 is an angle of view of the onboard camera 30 which has been fixed to the vehicle 10 when viewing the onboard camera 30 from the side of the vehicle 10. In other words, the angle A2 is an angle of view of the onboard camera 30 in a vertical direction.

Any of known film heaters is adopted/employed to the heater 40, for example (refer to Japanese Patent Application Laid-Open No. 2008-77879, Japanese Patent Application Laid-Open No. H7-153559, and Japanese Patent Application Laid-Open 2011-222461).

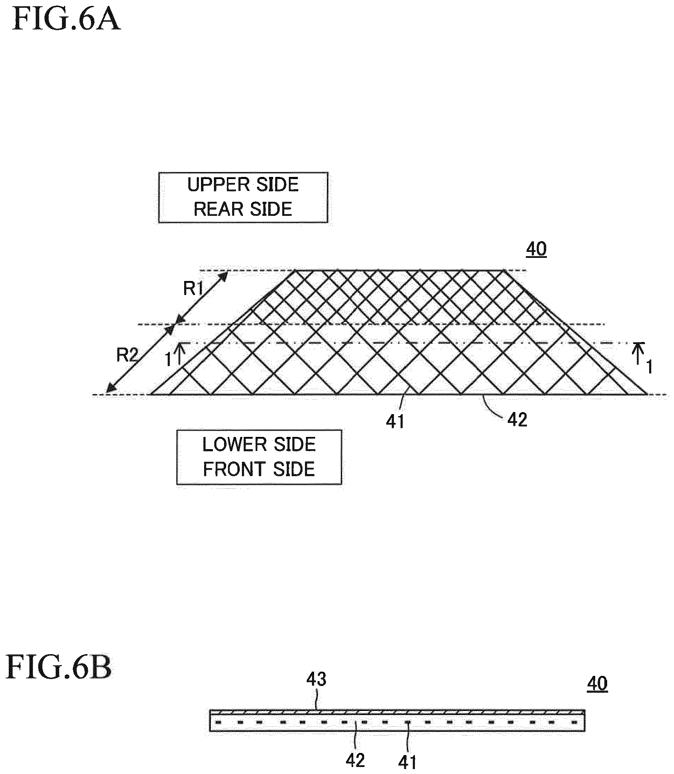

In this embodiment, as shown in FIGs. 6A and 6B, the heater 40 has a laminated structure where a transparent substrate layer 42 and an adhesive layer 43 are laminated. The transparent substrate layer 42 has a sheet shape and consists of a transparent base material in which a plurality of heating elements 41 are embedded. The adhesive layer 43 consists of a transparent adhesive.

Each of the heating elements 41 is made of an extremely thin conductive wire. For example, the heating element 41 contains silver, copper, palladium, and the like, and has a wire diameter of several micrometers (µm) (e.g., more than several micrometers (µm) and less than 50 micrometers (µm)). In addition, an aperture ratio of the heater 40 is 80% or more. Therefore, the heater 40 is substantially transparent. The heater 40 has a shape and a size which match with/correspond to the shape (that is, a substantially trapezoidal planar shape) and the size of the imaging glass part FGC, respectively. The heater 40 is bonded and fixed (that is, closely adhering/attached) to the surface on the vehicle cabin side of the imaging glass part FGC by the adhesive layer 43 (refer to FIG. 5B).

As shown in FIGs. 6A and 6B, the heating elements 41 of the heater 40 are arranged in a mesh shape inside the transparent substrate layer 42. The heater 40 is configured such that a density of the heating elements 41 which is located/present within the upper part R1 is greater than that of the heating elements 41 which is located/present within the lower part R2 in a state in which the heater 40 is bonded on (adheres to) the surface on the vehicle cabin side of the imaging glass part FGC. It should be noted that the heater 40 may virtually be divided into two parts (i.e., the upper part R1 and the lower part R2) in the vertical direction along a main surface of the heater 40. The height of the upper part R1 which is trapezoidal and the height of the lower part R2 which is also trapezoidal are equal to each other.

When the electric power is supplied from the power supply device 20 to the heater 40, a calorific value (amount of heat generation) per unit area in/of the upper part R1 is larger than a calorific value per unit area in/of the lower part R2. Furthermore, the heater 40 is designed such that, when the electric power is supplied from the power supply device 20 to the heater 40 in atmospheres/circumstances in which the vehicle 10 is assumed to be used, a temperature of "the surface outside the vehicle cabin" of "the part of the imaging glass part FGC" which is in contact with the upper part R1 becomes equal to or higher than a melting point (0 °C) of the ice.

It should be noted that, when the vehicle speed of the vehicle 10 is equal to or lower than a threshold vehicle speed, and therefore, there is no substantial traveling wind (including when the vehicle 10 is stopped), liquid (e.g., water) which is present on the outside surface of the imaging glass part FGC flows from the upper side to the lower side along the imaging glass part FGC. Therefore, it can be said that the imaging glass part FGC which is in contact with the upper part R1 is a specific part located in an upstream side in a liquid flow direction. The liquid flow direction is a direction in which the liquid flows on the outside surface of the imaging glass part FGC. It can also be said that the imaging glass part FGC which is in contact with the lower part R2 is a part (a part other than the specific part) located in a downstream side with respect to the specific part within the imaging glass part FGC.

### <Outline of Operation>

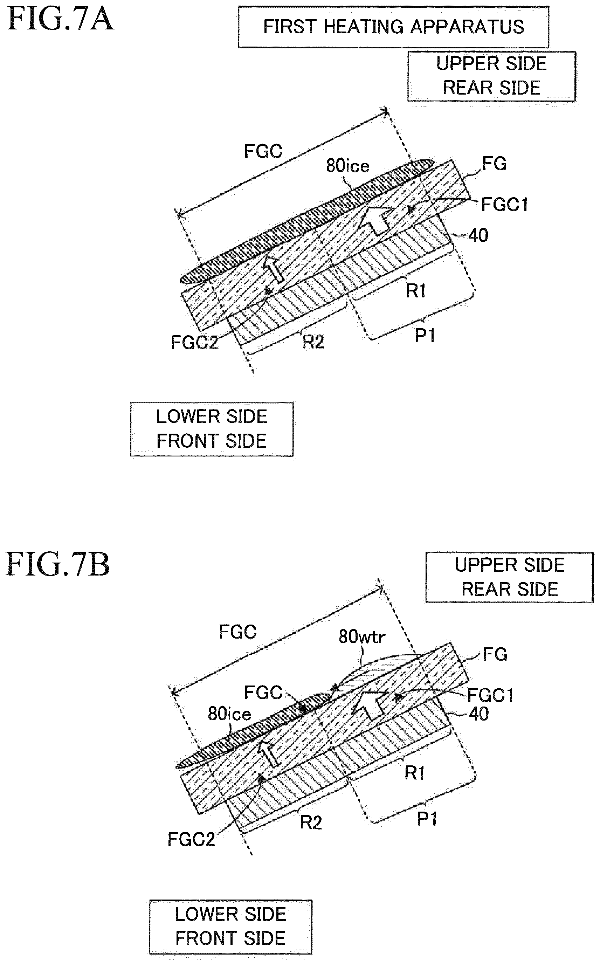

As shown in FIG. 7A, when the ice 80ice has adhered to (attached on) the whole imaging glass part FGC at a time point at which the ignition key switch (not shown) installed on the vehicle 10 is operated to be changed from the ON position to the OFF position, the camera ECU 60 causes the power supply device 20 to supply the electric power to the heater 40. Therefore, the heater 40 generates the heat. In this case, the calorific value per unit area of the upper part R1 of the heater 40 is larger than the calorific value per unit area of the lower part R2 of the heater 40.

A temperature of the outside surface of a part (hereinafter, referred to as an "upstream part FGC1") of the imaging glass part FGC in close contact with the upper part R1 is higher than a temperature of a part (hereinafter, referred to as a "downstream part FGC 2") of the imaging glass part FGC in close contact with the lower part R2.

For this reason, when the electric power continues being supplied to the heater 40 for a predetermined energization time (a predetermined energization period), the temperature of the outside surface of the upstream part FGC1 becomes equal to or higher than the melting point (0 °C) of the ice. Therefore, as shown in FIG. 7B, the ice adhering to (attached on) the outside surface of the upstream part FGC1 is melted due to the heat and is changed into water 80wtr.

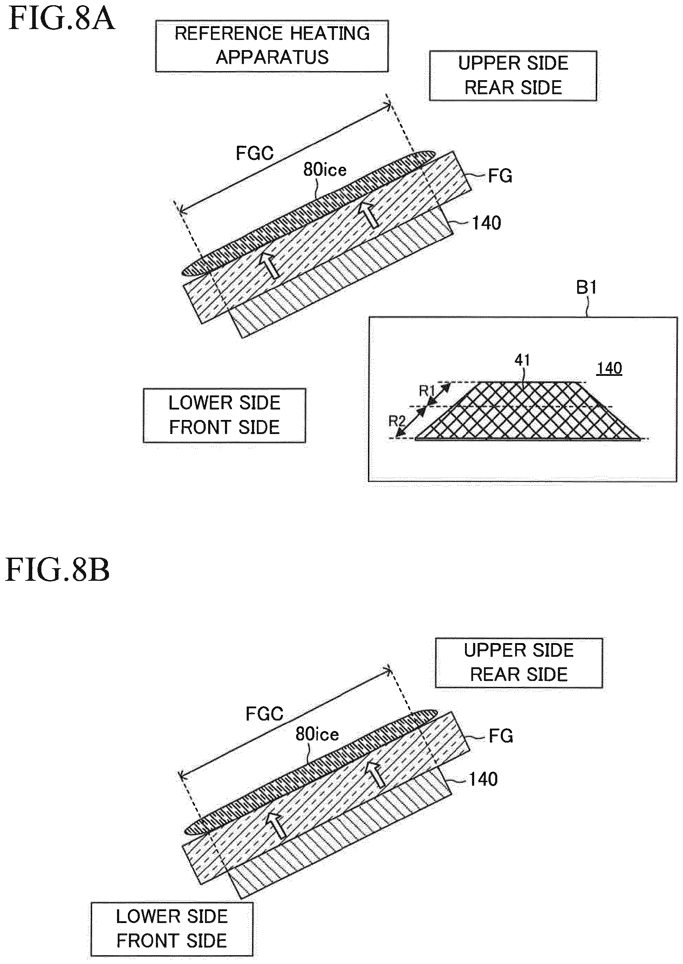

When the vehicle 10 is stopped (is not moving) so that the traveling wind is not blowing to/onto the glass FG, the water 80wtr whose temperature is higher than the temperature of the ice flows downward on the outside surface (surface outside the vehicle cabin) of the glass FG (the imaging glass part FGC) and melts the ice 80ice on the outside surface (surface outside of the vehicle cabin) of the downstream part FGC2. In this manner, the ice adhering to (attached on) the whole/entire outside surface of the imaging glass part FGC is removed more efficiently (that is, with less energy) as compared with a reference/comparison heating apparatus shown in FIGs. 8A and 8B.

It should be noted that the reference/comparison heating apparatus shown in FIGs. 8A and 8B comprises a heater 140 in place of the heater 40. As shown in a block B1 of FIGs. 8A and 8B, the heater 140 is configured such that a density of the heating elements 41 is constant over the whole heater 140 and the density of the heating elements 41 is the same as the average density of the heating elements 41 of the heater 40. Therefore, a power consumption (i.e., wattage) of the heater 140 when the heater 140 is connected to the power supply device 20 which is in a certain state is the same as a power consumption (i.e., wattage) of the heater 40 when the heater 40 is connected to the power supply device 20 which is in that certain state.

Therefore, when the electric power is supplied from the power supply device 20 to the heater 140, a temperature of the outside surface (surface outside the vehicle cabin) of the upstream part FGC1 is substantially equal to a temperature of the outside surface (surface outside the vehicle cabin) of the downstream part FGC2 and is lower than the temperature of the outside surface (surface outside the vehicle cabin) of the upstream part FGC1 of when the heater 40 is employed/used in place of the heater 140. Therefore, as shown in FIG. 8B, the ice 80ice adhering to (attached on) the imaging glass part FGC is unable to be melted (when the heater 140 is energized).

As understood from the above, in order for the reference/comparison heating apparatus to melt the ice 80ice, the temperature of each of the outside surface (surface outside the vehicle cabin) of the upstream part FGC1 and the outside surface (surface outside the vehicle cabin) of the downstream part FGC2 must be equal to or higher than the melting point (0 °C) of the ice. For that purpose, the power consumption of the heater 140 of the reference/comparison heating apparatus must be increased by increasing the density of the heating elements 41 in the heater 140 of the reference heating apparatus or by employing another methods. Accordingly, it is clearly understood that the first heating apparatus can remove the ice 80ice adhering to (attached on) the whole/entire outside surface of the imaging glass part FGC with less energy, as compared with the reference/comparison heating apparatus.

### <Specific Operation>

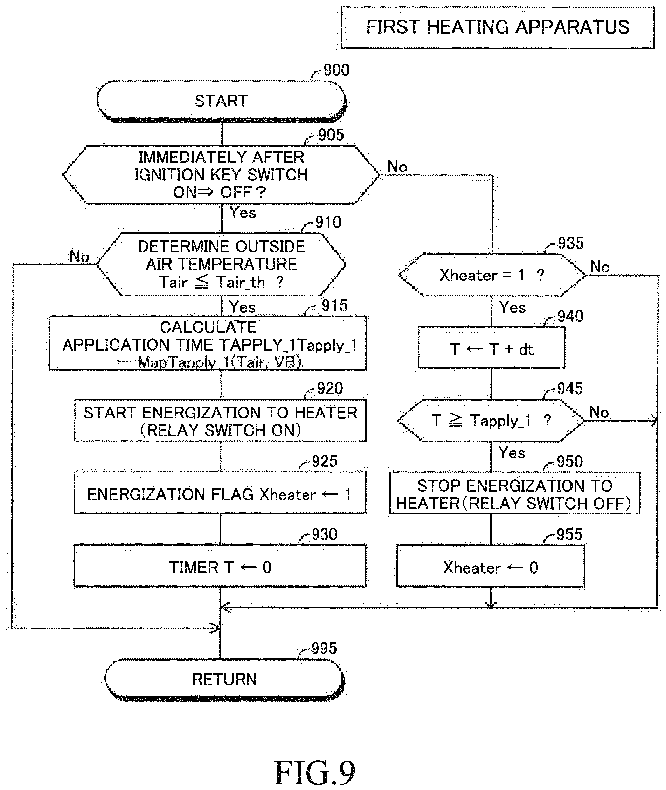

The CPU of the camera ECU 60 (hereinafter, simply referred to as the "CPU") executes a routine illustrated by a flowchart of FIG. 9 when the ignition key switch is positioned at the ON position, every time a predetermined calculation time (a predetermined calculation period) elapses. Therefore, when the ignition key switch is positioned at the ON position and an appropriate timing arrives, the CPU starts processing from step 900 to proceed to step 905. At step 905, the CPU determines whether or not the present time point is immediately after the time point (i.e. "IG/S switching time point) at which the position of the ignition key switch is/was changed from the Off position to the ON position.

When the present time point is immediately after the IG/S switching time point, the CPU makes a "Yes" determination at step 905 and proceeds to step 910 to determine whether or not the outside air temperature Tair which the outside air temperature sensor 62 is detecting is equal to or lower than a threshold outside air temperature Tair_th. The threshold outside air temperature Tair_th has been set at a temperature which permits to consider that there is a high probability that the ice has adhered to (attached on) the outside surface of the glass FG, if the actual outside air temperature Tair is equal to or lower than the threshold outside air temperature Tair_th.

When the outside air temperature Tair is neither equal to nor lower than (i.e., is higher than) the threshold outside air temperature Tair_th, the CPU makes a "No" determination at step 910 and proceeds to step 995 to tentatively terminate the present routine. As a result, the electric power is not supplied to the heater 40.

In contrast, when the outside air temperature Tair is equal to or lower than the threshold outside air temperature Tair_th, the CPU makes a "Yes" determination at step 910 and sequentially executes the processes of steps 915 to 930 described below, and then proceeds to step 995 to tentatively terminate the present routine.

Step 915: the CPU applies the outside air temperature Tair which the outside air temperature sensor 62 is detecting and the output voltage VB which the voltage sensor 63 is detecting to a lookup table MapTapply_1 (Tair, VB) to thereby calculate/obtain an application time Tapply_1. The lookup table MapTapply_1 (Tair, VB) has been determined/set based on results of experiments and stored in the ROM. According to the lookup table MapTapply_1 (Tair, VB), the application time Tapply_1 is set as described below. That is, if the electric power continues being supplied from the power supply device 20 to the heater 40 for the application time Tapply_1 (i.e., the relay switch 50 remains in the conduction state for the application time Tapply_1) at the outside air temperature Tair, the ice adhering to (attached on) the outside surface (surface outside the vehicle cabin) of the upstream part FGC1 is to be melted. According to the table MapTapply_1 (Tair, VB), the application time Tapply_1 becomes longer as the air temperature Tair lowers and becomes longer as the output voltage VB lowers.

Step 920: the CPU transmits the instruction signal to the relay switch 50 to set/change the state of the relay switch 50 to the conduction state (the ON state). As a result, the electric power is started to be supplied to the heater 40 from the power supply device 20.

Step 925: the CPU sets a value of an energization flag Xheater to "1". It should be noted that the value of the energization flag Xheater is set to "0" in an unillustrated initialization routine executed when the position of the ignition key switch is changed from the OFF position to the ON position.

Step 930: the CPU sets a value of a timer T to "0".

In this state, when the CPU executes the process of step 905 at a time point at which the predetermined calculation time has elapsed, that time point is not immediately after the position of the ignition key switch has been changed from the OFF position to the ON position. Therefore, the CPU makes a "No" determination at step 905 and proceeds to step 935 to determine whether or not the value of the energization flag Xheater is "1".

In this case, since the value of the flag of the energization flag Xheater is "1", the CPU makes a "Yes" determination at step 935 and proceeds to step 940 to increase the value of the timer T by a "fixed value dt". Next, the CPU proceeds to step 945 to determine whether or not the value of the timer T is equal to or greater/longer than the application time Tapply_1. That is, at step 920, the CPU determines whether or not an elapsed time from when the electric power started to be supplied from the power supply device 20 to the heater 40 has become equal to or longer than the application time Tapply_1.

When the value of the timer T is smaller/shorter than the application time Tapply_1, the CPU makes a "No" determination at step 945 and directly proceeds to step 995 to tentatively terminate the present routine. In this case, the supply of the electric power to the heater 40 is continued.

Thereafter, when the value of the timer T is increased at step 940, and as a result, the value of the timer T becomes equal to or greater/longer than the application time Tapply_1, the CPU proceeds to step 945 to make a "Yes" determination at step 945. Thereafter, the CPU sequentially executes the processes of steps 950 and 955 described below. Thereafter, the CPU proceeds to step 995 to tentatively the present routine.

Step 950: the CPU transmits the instruction signal to the relay switch 50 to set/change the state of the relay switch 50 to the breaking state (the OFF state). As a result, electric power supply from the power supply device 20 to the heater 40 is stopped.

Step 955: the CPU sets the value of the energization flag Xheater to "0".

It should be noted that, when the value of the energization flag Xheater is not "1" at the time point at which the CPU executes the process of step 935, the CPU makes a "No" determination at step 935 and directly proceeds to step 995 to tentatively terminate the present routine.

As described above, the first heating apparatus can reduce an amount of energy consumed at/by the heater 40 to melt and remove the ice adhering to the imaging glass part FGC.

It should be noted that, the first heating apparatus can warm, not only the inside surface (surface on the vehicle cabin side) of the upstream part FGC1 but also the inside surface (surface on the vehicle cabin side) of the downstream part FGC2, to such an extent that cloud (the dew condensation) of those parts can be prevented or removed. Therefore, when it is determined that the inner surface of the imaging glass part FGC of the glass FG is cloudy (or foggy), the first heating apparatus supplies the electric power to the heater 40 (i.e., energizes the heater 40). As a result, the first heating apparatus can remove the cloud of the inside/inner surface on the vehicle cabin side of the imaging glass part FGC.

### <<Second Embodiment>>

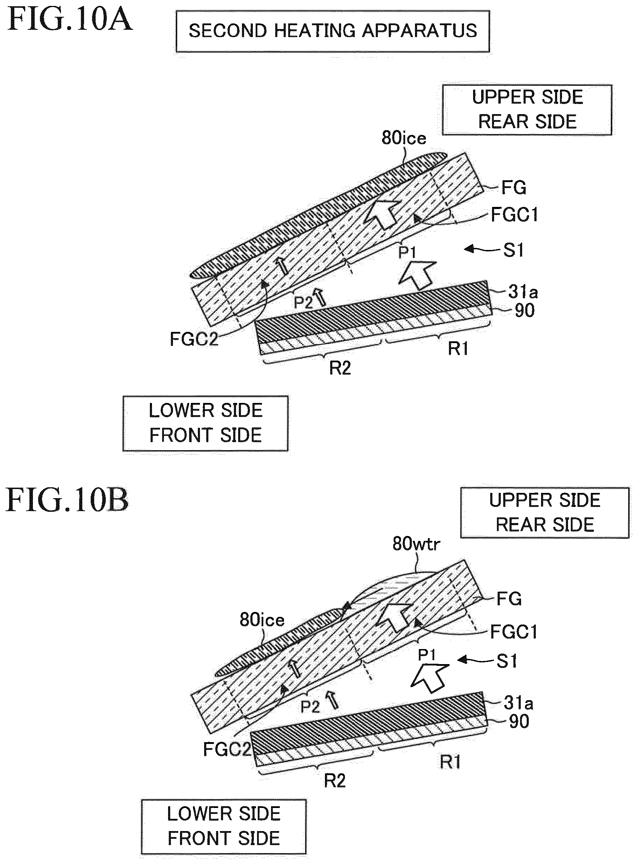

The heating apparatus of a vehicle window glass (hereinafter, referred to as a "second heating apparatus") according to the second embodiment of the present invention differs from the first heating apparatus only in that the second heating apparatus employs a heater 90 in place of the heater 40, as shown in FIG. 10. Hereinafter, this difference will be mainly described.

The heater 90 is disposed/provided on the whole back surface of the hood part 31a shown in FIGs. 3 and 4. The back surface of the hood part 31a is the surface opposite to "the surface of the hood part 31a" facing the glass FG. It should be noted that the heater 90 may be disposed/provided on the front surface of the hood part 31a (that is, the surface facing the glass FG) in place of the back surface of the hood part 31a.

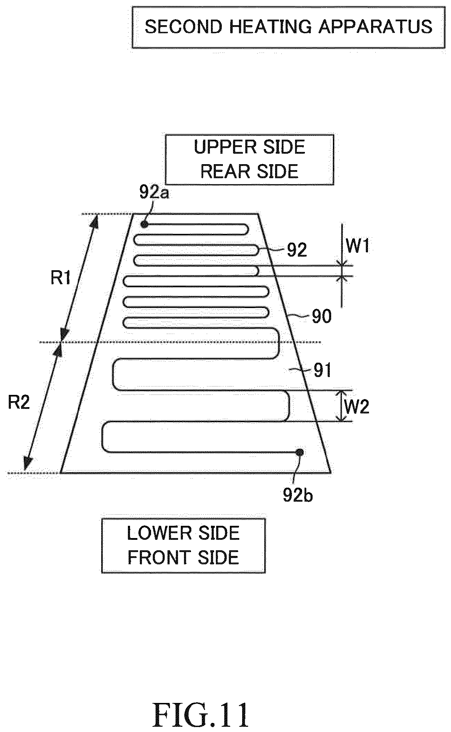

As shown in FIG. 11, the heater 90 includes a sheet 91 and metallic heating elements 92.

The sheet 91 consists of polyethylene terephthalate (PET) having a good insulation property. The sheet 91 has a planar shape (that is, a trapezoidal shape) which is substantially the same as the shape of the hood part 31a.

Each of the heating elements 92 (the metallic heating elements 92) is a heater wire (a heating wire) containing metal (for example, brass). The heating elements 92 are formed/provided on the sheet 91 in a zigzag manner by printing. More specifically, the heating elements 92 are configured such that a width W1 between the adjacent heating elements 92 within the upper part R1 is smaller than a width W2 between the adjacent heating elements 92 within the lower part R2. In other words, the heating elements 92 are configured such that the density of the heating elements 92 within the upper part R1 is greater than the density of the heating elements 92 within the lower part R2. One end 92a of the heating elements 92 is connected to a terminal of the relay switch 50, and the other end 92b of the heating elements 92 is grounded.

A lower surface of a double-sided tape (not shown) is adhering to "a surface of the sheet 91" on which the heating elements 92 is formed. An upper surface of that double-sided tape adheres to the back surface of the hood part 31a.

When the electric power is supplied from the power supply device 20 to the heater 90 (the heating elements 92) (that is, when the relay switch 50 is kept in the conduction state), the heater 90 generates the heat and the generated heat (radiative heat) heats the imaging glass part FGC. In this case, an amount of heat per unit area supplied from the upper part R1 of the heater 90 to an upper part P1 of the imaging glass part FGC is greater/larger than an amount of heat per unit area supplied from the lower part R2 of the heater 90 to a lower part P2 of the imaging glass part FGC (refer to a size of a white arrow shown in FIGs. 10A and 10B). That is, the heater 90 heats the upstream part FGC1 with a greater amount of heat as compared with the downstream part FGC2.

Therefore, when the electric power is supplied from the power supply device 20 to the heater 90, the temperature of the outside surface (surface outside the vehicle cabin) of the upstream part FGC1 becomes higher than the temperature of the outside surface (surface outside the vehicle cabin) of the downstream part FGC2. For this reason, when the electric power continues being supplied to the heater 90 for the predetermined energization time, the temperature of the outside surface of the upstream part FGC1 becomes equal to or higher than the melting point (0 °C) of the ice. Therefore, as shown in FIG 10B, the ice 80ice adhering to the outside surface of the upstream part FGC1 is melted due to the heat to become water 80wtr. The water 80wtr whose temperature is higher than a temperature of the ice flows downward on the outside surface of the imaging glass part FGC to melt the ice 80ice on the outside surface of the downstream part FGC2. In this manner, the ice adhering to the whole/entire outside surface of the imaging glass part FGC is removed more efficiently (that is, with less energy).

### <<Third Embodiment>>

The heating apparatus of a vehicle window glass (hereinafter, referred to as a "third heating apparatus" in some cases) according to the third embodiment of the present invention will be described.

When the vehicle 10 is travelling at a relatively high speed, a traveling wind which blows from the front side to the rear side of the vehicle 10 and is generated due to the traveling of the vehicle 10 becomes stronger than a traveling wind occurred when the vehicle 10 is traveling at a relatively low speed (including when the vehicle 10 is stopped/is not moving). Therefore, when the vehicle 10 is traveling at the relatively high speed, the water (liquid) on the outside surface of the imaging glass part FGC flows from the outside surface of the downstream part FGC2 to the outside surface of the upstream part FGC1. In other words, when the vehicle 10 is traveling at the relatively high speed, the outside surface of the downstream part FGC2 becomes the upstream side in a direction in which the water (the liquid) flows on the surface outside the vehicle cabin, and the outside surface of the upstream part FGC1 becomes the downstream side in the direction in which the water (the liquid) flows on the surface outside the vehicle cabin. It should be noted that, when the vehicle 10 is traveling at the relatively low speed, the water (liquid) on the outside surface of the imaging glass part FGC flows from the outside surface of the upstream part FGC1 to the outside surface of the downstream part FGC2.

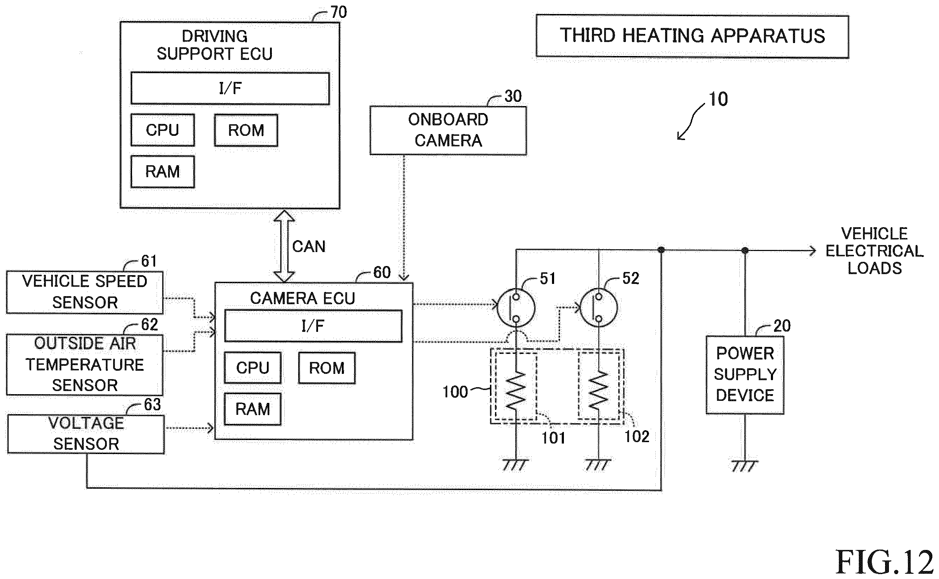

The third heating apparatus configured based on the above viewpoints differs from the first heating apparatus only in the following points.
- As shown in FIG. 12, the third heating apparatus comprises a heater 100 in place of the heater 40 and "a first relay switch 51 and a second relay switch 52" in place of the relay switch 50. The heater 100 includes a first heater 101 and a second heater 102.
- The third heating apparatus controls the heater 100 in accordance with the vehicle speed Vs of the vehicle 10. To control the heater 100, the CPU of the camera ECU 60 in the third heating apparatus executes a routine shown in FIG .14 in place of the routine of FIG. 9.

Hereinafter, those differences will be mainly described.

### (Circuit Configuration)

A state of the first relay switch 51 shown in FIG. 12 is switched between a conduction state and a breaking state in response to an instruction signal from the camera ECU 60. When the first relay switch 51 is in the conduction state, the electric power is supplied from the power supply device 20 to the first heater 101. When the first relay switch 51 is in the breaking state, connection between the power supply device 20 and the first heater 101 is cut off, and thus, the electric power is not supplied from the power supply device 20 to the first heater 101.

A state of the second relay switch 52 shown in FIG. 12 is switched between a conduction state and a breaking state in response to an instruction signal from the camera ECU 60. When the second relay switch 52 is in the conduction state, the electric power is supplied from the power supply device 20 to the second heater 102. When the second relay switch 52 is in the breaking state, connection between the power supply device 20 and the second heater 102 is cut off, and thus, the electric power is not supplied from the power supply device 20 to the second heater 102.

### (Heater)

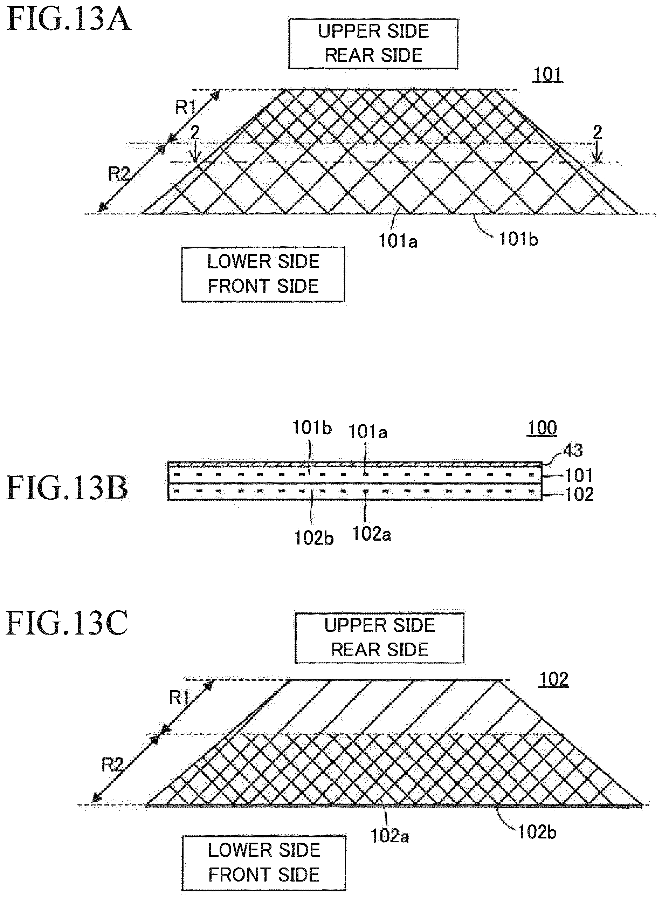

As described above, the heater 100 includes the first heater 101 and the second heater 102. As shown in FIGs. 13A and 13B, the first heater 101 includes a plurality of heating elements 101a and a transparent substrate layer 101b having a sheet shape. The transparent substrate layer 101b made of a transparent base material. The heating elements 101a are embedded in the transparent substrate layer 101b. Each of the heating elements 101a is the extremely thin conductive wire similar to the heating elements 41. Therefore, the first heater 101 is substantially transparent. The transparent substrate layer 101b is the same as the transparent substrate layer 42.

The heating elements 101a are arranged inside the transparent substrate layer 101b in the same manner as the heating elements 41. Therefore, when the electric power is supplied from the power supply device 20 to the first heater 101, the calorific value per unit area of/in the upper part R1 becomes larger than the calorific value per unit area of/in the lower part R2.

As shown in FIGs. 13C and 13B, the second heater 102 includes a plurality of heating elements 102a and a transparent substrate layer 102b having a sheet shape. The transparent substrate layer 102b is made of a transparent base material. The heating elements 102a are embedded in the transparent substrate layer 102b. Each of the heating elements 102a is the extremely thin conductive wire similar to the heating elements 41. Therefore, the second heater 102 is substantially transparent. The transparent substrate layer 102b is the same as the transparent substrate layer 42.

The heating elements 102a are arranged inside the transparent substrate layer 102b in the mesh shape. The second heater 102 is configured such that a density of the heating elements 102a which is located/present within the lower part R2 is greater than that of the heating elements 102a which is located/present within the upper part R1 in a state in which the second heater 102 is bonded on (adhering to) the surface on the vehicle cabin side of the imaging glass part FGC. As a result, when the electric power is supplied from the power supply device 20 to the second heater 102, the calorific value per unit area of/in the lower part R2 is larger/greater than the calorific value per unit area of/in the upper part R1.

As shown in FIG. 13B, the heater 100 has a structure in which the first heater 101 is stacked on the second heater 102, and the adhesive layer 43 consisting of the transparent adhesive is stacked on the first heater 101. The heater 100 has a shape and a size which match with/correspond to the shape and the size of the imaging glass part FGC, respectively. The heater 100 is bonded (adheres) and fixed to the surface on the vehicle cabin side of the imaging glass part FGC by the adhesive layer 43.

The first heater 101 is designed such that, when the electric power is supplied from the power supply device 20 to the first heater 101, in atmospheres/circumstances in which the vehicle 10 is assumed to be used, a temperature of "the surface outside the vehicle cabin" of "the part of the imaging glass part FGC" which is in contact with the upper part R1" becomes equal to or higher than the melting point (0 °C) of the ice. Furthermore, the second heater 102 is designed such that, when the electric power is supplied from the power supply device 20 to the second heater 102, in the atmospheres/circumstances in which the vehicle 10 is assumed to be used, a temperature of "the surface outside the vehicle cabin" of "the part of the imaging glass part FGC" which faces the lower part R2" becomes equal to or higher than the melting point (0 °C) of the ice.

### <Specific Operation>

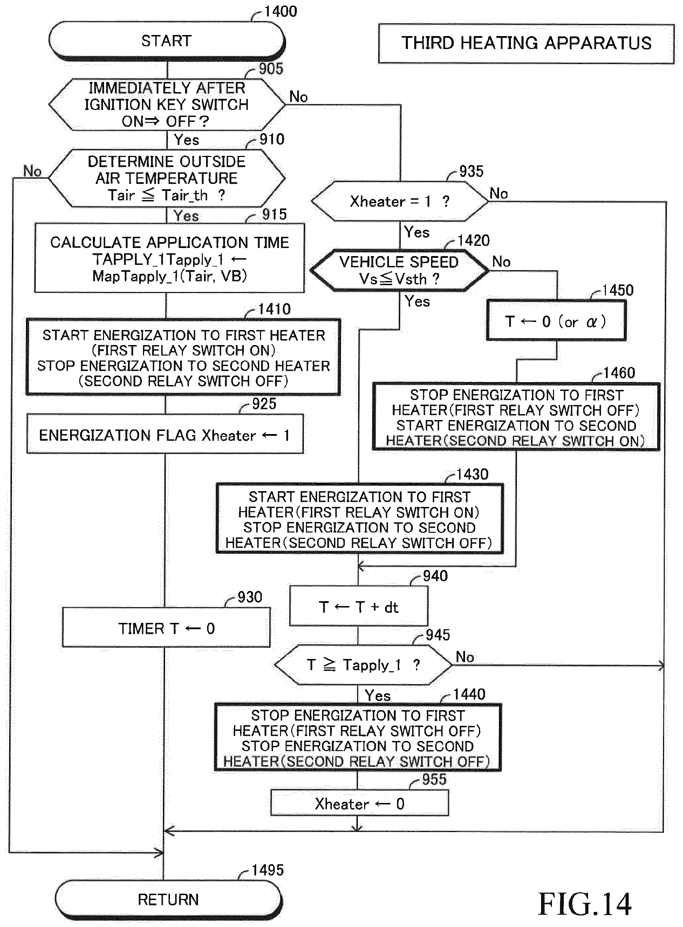

The CPU executes a routine illustrated by a flowchart of FIG. 14 in place of the routine FIG. 9 when the ignition key switch is positioned at the ON position, every time the predetermined calculation time elapses. It should be noted that the steps shown in FIG. 14 which cause the CPU to execute the same processes as the steps of the routine shown in FIG. 9 are given the same reference numerals as the reference numerals given to the steps shown in FIG. 9. The descriptions on the processes at those steps are omitted as appropriate.

When the outside air temperature Tair is equal to or lower than the threshold outside air temperature Tair_th immediately after the position of the ignition key switch was changed from the OFF position to the ON position, the CPU proceeds to step 915 to calculate/determine the application time Tapply_1. At that time point, since the vehicle 10 is stopped (not moving), the vehicle speed Vs is "0".

Thereafter, the CPU proceeds to step 1410 and transmits the instruction signals to the first relay switch 51 and the second relay switch 52 to set the state of the first relay switch 51 to the conduction state and set the state of the second relay switch 52 to the breaking state. As a result, the first heater 101 starts generating the heat and the second heater 102 does not generate the heat. It should be noted that when the position of the ignition key switch is the OFF position, the state of each of the first relay switch 51 and the second relay switch 52 is maintained in the breaking state. Subsequently, the CPU executes the processes of the steps 925 and 930 and proceeds to step 1495 to tentatively terminate the present routine.

When the CPU executes the process of step 905 at a time point at which the predetermined calculation time has elapsed under the above state, the CPU makes a "No" determination at step 905 to proceed to step 935. At step 935, the CPU makes a "Yes" determination to proceed to step 1420.

At step 1420, the CPU determines whether or not the vehicle speed Vs of the vehicle 10 is equal to or lower than the threshold vehicle speed Vsth. When the vehicle speed Vs is equal to or lower than the threshold vehicle speed Vsth, the liquid (water) flows downward on "the surface outside the vehicle cabin" of the imaging glass part FGC. When the vehicle speed Vs is higher than the threshold vehicle speed Vsth, the liquid (water) flows upward on "the surface outside the vehicle cabin" of the imaging glass part FGC due to the traveling wind.

When the vehicle speed Vs is equal to or lower than the threshold vehicle Vsth, the CPU makes a "Yes" determination at step 1420 and proceeds to step 1430 to execute the same process as the process of step 1410. Thereafter, the CPU proceeds to step 940 to increase the value of the timer T by the "fixed value dt", and then, proceeds to step 945 to determine whether or not the value of the timer T is equal to or greater/longer than the application time Tapply_1. When the value of the timer T is neither equal to nor greater/longer than the application time Tapply_1 (i.e., T is smaller/shorter than the application time Tapply_1), the CPU makes a "No" determination at step 945 and directly proceeds to step 1495 to tentatively terminate the present routine.

When this state continues so that the value of the timer T becomes equal to or greater/longer than the application time Tapply_1, the CPU makes a "Yes" determination at step 945 to proceed to step 1440. At step 1440, the CPU transmits the instruction signals to the first relay switch 51 and the second relay switch 52 to set the state of the first relay switch 51 to the conduction state and set the state of the second relay switch 52 to the breaking state. It should be noted that the relay switch, which is in the breaking state at the time point at which the process of step 1440 is executed among the first relay switch 51 and the second relay switch, remains in the breaking state by the process of step 1440.

Meanwhile, when the vehicle speed Vs is higher than the threshold vehicle speed Vsth, the liquid (water) flows upward on "the surface outside the vehicle cabin" of the imaging glass part FGC due to the traveling wind. Accordingly, when the vehicle speed Vs is higher than the threshold vehicle speed Vsth at the time point at which the CPU executes the process of step 1420, the CPU makes a "No" determination at step 1420 to sequentially execute the processes of steps 1450 and 1460 described below, and thereafter, proceeds to step 940.

Step 1450: the CPU sets the value of the timer T to "0".

It should be noted that the CPU may set the value of the timer T to a "value α" which is a positive value. That value α may have been set at a value, which is smaller than the application time Tapply_1, and which is larger as a period between a time point at which the first heater 101 started to be energized and the present time point is longer.

Step 1460: the CPU transmits the instruction signals to the first relay switch 51 and the second relay switch 52 to set the state of the first relay switch 51 to the breaking state and set the state of the second relay switch 52 to the conduction state. As a result, the second heater 102 starts generating the heat and the first heater 101 does not generate the heat.

The thus configured third heating apparatus melts and removes the ice adhering to the imaging glass part FGC in the same manner as the first heating apparatus shown in FIG. 7, when the vehicle speed Vs is equal to or lower than the threshold vehicle speed Vsth, That is, in this case, the first heater 101 generates the heat, and thus, the calorific value per unit area of/in the upper part R1 is larger than the calorific value per unit area of/in the lower part R2.

Therefore, the temperature of the "surface outside the vehicle cabin" of the upstream part FGC1 becomes higher than the temperature of the "surface outside the vehicle cabin" of downstream part FGC2, so as to be equal to or higher than the melting point (0 °C) of the ice. As a result, as shown in FIG. 7B, the ice adhering to "the surface outside of the vehicle cabin" of the upstream part FGC1 is melted due to the heat and changed into water 80wtr. The water 80wtr, into which the ice has changed, flows downward on "the surface outside the vehicle cabin" of the imaging glass part FGC to melt the ice 80ice adhering to "the surface outside the vehicle cabin" of the downstream part FGC2.

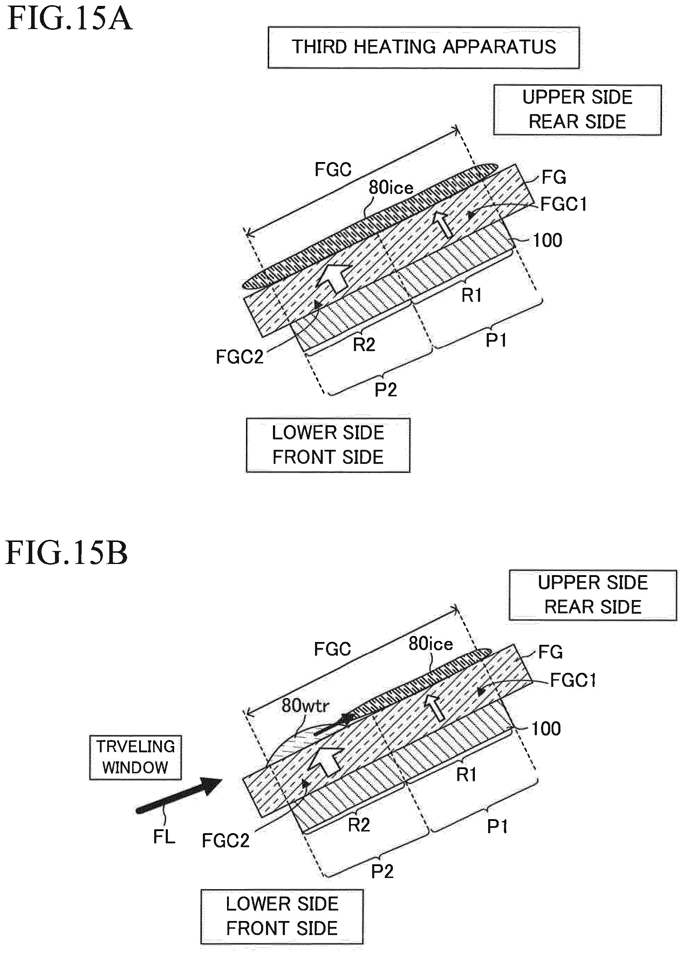

Furthermore, when the vehicle speed Vs is higher than the threshold vehicle speed Vsth, the third heating apparatus causes the second heater 102 to generate the heat (without causing the first heater 101 to generate the heat), as shown in FIG. 15. Therefore, in this case, the calorific value per unit area of/in the lower part R2 is larger than the calorific value per unit area of/in the upper part R1.

Accordingly, the temperature of "the surface outside the vehicle cabin" of the downstream part FGC2 becomes higher than "the surface outside the vehicle cabin" of the upstream part FGC1, and becomes equal to or higher than the melting point (0 °C) of the ice. As a result, as shown in FIG. 15B, the ice adhering to "the surface outside the vehicle cabin" of the downstream part FGC2 is melted due to the heat and becomes the water 80wtr. That water 80wtr flows upward on "the surface outside the vehicle cabin" of the imaging glass part FGC due to the traveling wind FL blowing toward the glass FG so as to melt the ice 80ice adhering to "the surface outside the vehicle cabin" of the upstream part FGC1.

As understood from the above, even when the vehicle 10 is traveling/running, the third heating apparatus can reduce an amount of energy consumed by the heater 100 for melting and removing the ice adhering to the imaging glass part FGC.

Although each of the embodiments of the present invention has been specifically described above, the present invention is not limited to the above embodiments, and various modified examples based on the technical idea within the scope of the claims can be adopted/employed.

The arrangement, shape, and size of each of the heater 40, the heater 90, and the heater 100; and physical properties and distribution of the heating elements 41, the heating elements 92, the heating elements 101a, and the heating elements 102a, may be modified as long as the function/operation and effect of each of the heater 40, the heater 90, and the heater 100 can be obtained.

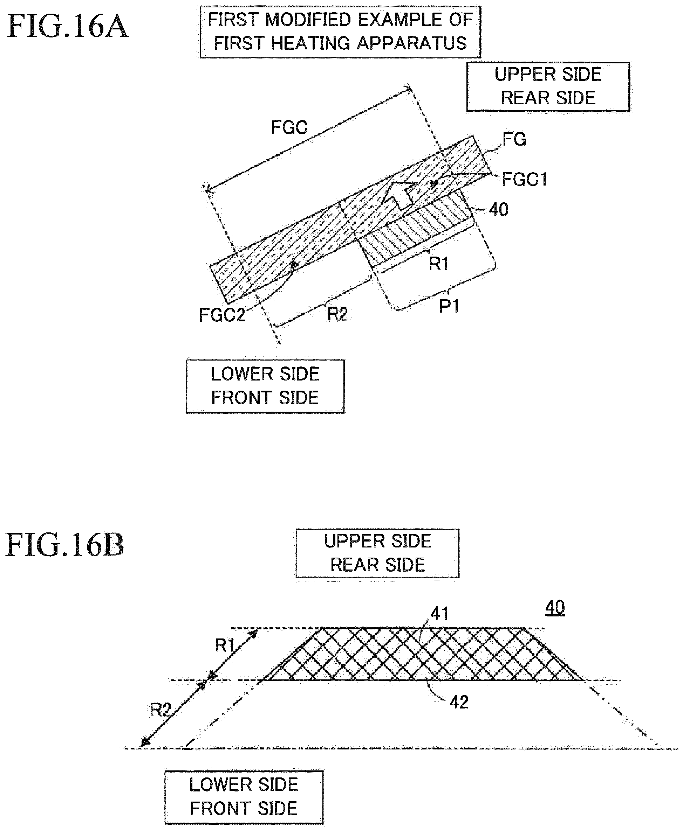

For example, as shown in FIGs. 16A and 16B, the heater 40 of a first modified example of the first heating apparatus may consist only of the upper part R1 of the heater 40 of the first heating apparatus. In this case, the heater 40 directly applies the heat only to the upstream part FGC1 of the imaging glass part FGC, and does not directly apply the heat to the downstream part FGC2. That is, the amount of heat per unit area supplied to the downstream part FGC2 is zero (0). Therefore, since this first modified example can also heat the upstream part FGC1 with a larger/greater amount of heat than the downstream part FGC2, the ice adhering to the whole/entire outside surface of the imaging glass part FGC is more efficiently removed (is removed with less energy).

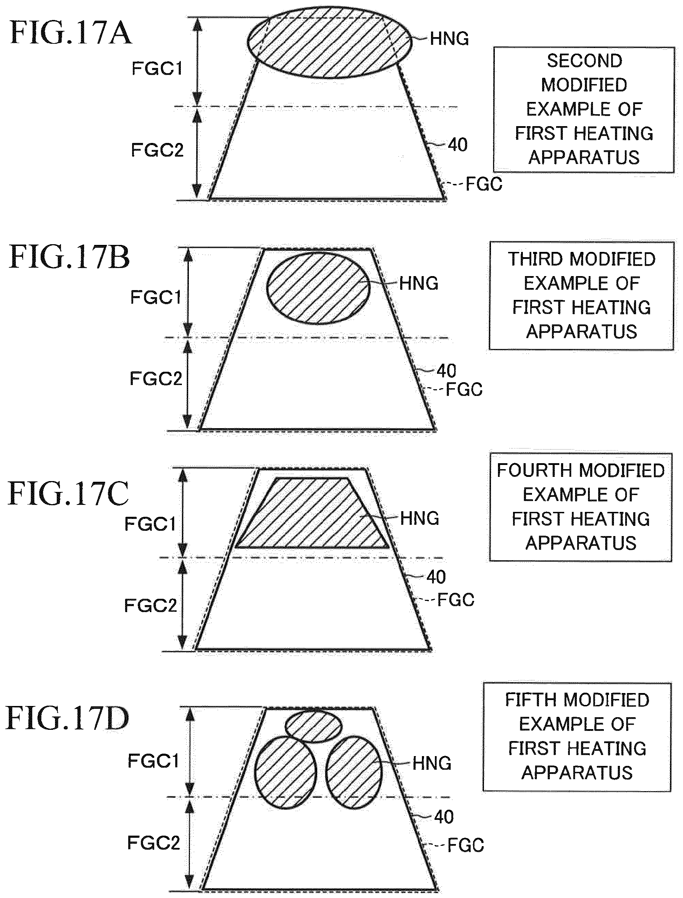

Second to fifth modified examples of the first heating apparatus have heaters shown in FIGs. 17A to 17D, respectively, as the heater 40 of the first heating apparatus. Each of them are arranged/provided within a part which includes the imaging glass part FGC and hatched part(s) HNG. Furthermore, a density of the heating elements 41 formed within the hatched part(s) HNG is/are larger than a density of the heating elements 41 formed within a part excluding the hatched part(s) HNG.

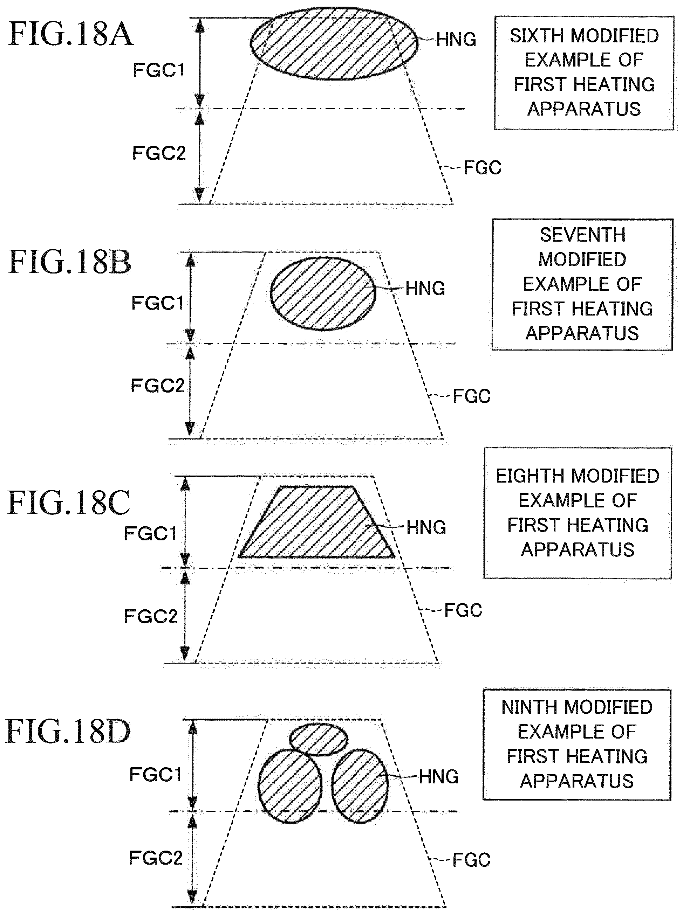

Sixth to ninth modified examples of the first heating apparatus have heaters shown in FIGs. 18A to 18D, respectively, as the heater 40 of the first heating apparatus. Each of the heaters shown in FIGs. 18A to 18D is the same as the heater 40 which the first modified example comprises, but is arranged/provided only within a hatched part HNG shown in each of FIGs. 18A to 18D.

A tenth modified example of the first heating apparatus further comprises a heater 90 provided to the hood part 31a of the second heating apparatus in addition to the heater 40. In this example, the heating elements 92 of the heater 90 provided to the hood part 31a are configured to heat the imaging glass part FGC uniformly/evenly.

Furthermore, the window glass to which the heating apparatus of the present invention is applied is not limited to the front window glass (windshield) of the vehicle, and may be applied to "a rear window glass and/or a side window glass" of the vehicle. In this case, the onboard camera is provided/disposed so as to face each of the window glasses (i.e., the rear window glass and the side window glass).

## Claims

1. A heating apparatus for a window glass of a vehicle (10), said heating apparatus including a heater (100) and a control unit (60) for controlling electric power supplied to said heater (100);
wherein the heater (100) is configured to generate heat for melting ice adhering to an imaging glass part which includes a whole of a particular part of said window glass, said particular part corresponding to a shooting range of an onboard camera (30) which is disposed in an interior space of said vehicle (10) and photographs an outside of said vehicle (10) through said window glass,
wherein said heater (100) is configured to heat said imaging glass part (FGC) whereby the heater (100) is configured to apply an amount per unit area of heat to an upstream specific part of said imaging glass part greater than an amount per unit area of heat which the heater (100) is configured to apply to a downstream part of said imaging glass part (FGC), said upstream specific part being located upstream in a liquid flowing direction in which, when in use, liquid flows on a surface outside said vehicle cabin of said imaging glass part (FGC) and said downstream part being located downstream of said upstream specific part in said liquid flowing direction,
**characterized in that**
the heating apparatus further comprises a vehicle speed sensor (61) configured to detect a vehicle speed of said vehicle (10);
wherein:
said heater (100) comprises a first heater (101) and a second heater (102); and
said control unit (60) is configured to control said electric power supplied to said heater (100), in such a manner as to:
supply electric power to the first heater (101) to heat a whole or a part of an upper part, as said upstream specific part, when said vehicle speed is equal to or lower than a threshold vehicle speed, wherein said imaging glass part is divided into two parts in a vertical direction along said window glass, said two parts including said upper part and a lower part; and
supply electric power to the second heater (102) to heat a whole or a part of said lower part, as said upstream specific part, when said vehicle speed is higher than said threshold vehicle speed.

2. The heating apparatus according to claim 1,
wherein,
said heater (100) is configured to be capable of heating said whole of said particular part.

3. The heating apparatus according to claim 2,
wherein,
said heater (100) is closely attachable to a vehicle cabin side surface of said whole of said particular part.

4. The heating apparatus according to claim 2,
wherein,
said heater (90) is disposable at a hood part (31a) which extends forward under said onboard camera (30) in said interior space of said vehicle (10) so as to face said imaging glass part (FGC).

## Patentansprüche

1. Heizvorrichtung für eine Fensterscheibe eines Fahrzeugs (10), wobei die Heizvorrichtung ein Heizelement (100) und eine Steuereinheit (60) zum Steuern der dem Heizelement (100) zugeführten elektrischen Leistung umfasst;
wobei die Heizvorrichtung (100) dafür konfiguriert ist, Wärme zum Schmelzen von Eis zu erzeugen, das an einem bildgebenden Glasteil anhaftet, der ein ganzes oder ein bestimmtes Teil des Fensterglases umfasst, wobei der bestimmte Teil einem Aufnahmebereich einer Bordkamera (30) entspricht, die in einem Innenraum des Fahrzeugs (10) angeordnet ist und eine Außenseite des Fahrzeugs (10) durch das Fensterglas fotografiert,
wobei die Heizvorrichtung (100) dafür konfiguriert ist, das bildgebende Glasteil (FGC) zu erwärmen, wodurch die Heizvorrichtung (100) dafür konfiguriert ist, eine Wärmemenge pro Flächeneinheit auf einen stromaufwärtigen spezifischen Teil des bildgebenden Glasteils aufzubringen, die größer ist als eine Wärmemenge pro Flächeneinheit, für die die Heizvorrichtung (100) konfiguriert ist, sie auf einen stromabwärtigen Teil des bildgebenden Glasteils (FGC) aufzubringen, wobei der stromaufwärtige spezifische Teil stromaufwärts in einer Flüssigkeitsströmungsrichtung angeordnet ist, in der im Gebrauch Flüssigkeit auf eine Oberfläche außerhalb der Fahrzeugkabine des bildgebenden Glasteils (FGC) fließt, und wobei der stromabwärtige Teil stromabwärts von dem stromaufwärtigen spezifischen Teil in der Flüssigkeitsströmungsrichtung angeordnet ist,
**dadurch gekennzeichnet, dass**
die Heizvorrichtung ferner einen Fahrzeuggeschwindigkeitssensor (61) umfasst, der dafür konfiguriert ist, eine Fahrzeuggeschwindigkeit des Fahrzeugs (10) zu erfassen;
wobei:
die Heizvorrichtung (100) eine erste Heizvorrichtung (101) und eine zweite Heizvorrichtung (102) umfasst; und
die Steuereinheit (60) dafür konfiguriert ist, die der Heizvorrichtung (100) zugeführte elektrische Leistung so zu steuern, dass:
dem ersten Heizelement (101) elektrische Energie zugeführt wird, um ein ganzes oder einen Teil eines oberen Teils, als der stromaufwärts gelegene spezifische Teil, zu erwärmen, wenn die Fahrzeuggeschwindigkeit gleich oder niedriger als eine Schwellenfahrzeuggeschwindigkeit ist, wobei der bildgebende Glasteil in einer vertikalen Richtung entlang des Fensterglases in zwei Teile geteilt ist, wobei die zwei Teile den oberen Teil und einen unteren Teil umfassen; und
dem zweiten Heizelement (102) elektrische Energie zugeführt wird, um ein ganzes oder einen Teil des unteren Teils, als der stromaufwärts gelegene spezifische Teil, zu erwärmen, wenn die Fahrzeuggeschwindigkeit höher als eine Schwellenfahrzeuggeschwindigkeit ist.

2. Heizvorrichtung nach Anspruch 1,
wobei
die Heizvorrichtung (100) so konfiguriert ist, dass sie den gesamten bestimmten Teil erwärmen kann.

3. Heizvorrichtung nach Anspruch 2,
wobei
die Heizvorrichtung (100) eng an einer fahrzeugkabinenseitigen Oberfläche der Gesamtheit des jeweiligen Teils angebracht werden kann.

4. Heizvorrichtung nach Anspruch 2,
wobei
die Heizvorrichtung (90) an einem Haubenteil (31a) angeordnet ist, der sich im Innenraum des Fahrzeugs (10) nach vorne unter die Bordkamera (30) erstreckt, so dass er dem bildgebenden Glasteil (FGC) zugewandt ist.

## Revendications

1. Appareil de chauffage pour une vitre d'un véhicule (10), ledit appareil de chauffage comprenant un élément chauffant (100) et une unité de contrôle (60) pour contrôler l'alimentation électrique fournie audit élément chauffant (100) ;
dans lequel l'élément chauffant (100) est configuré pour générer de la chaleur pour faire fondre de la glace adhérant à une partie de verre d'imagerie qui comprend la totalité d'une partie particulière de ladite vitre, ladite partie particulière correspondant à un champ de prise de vue d'une caméra embarquée (30) qui est disposée dans un espace intérieur dudit véhicule (10) et photographie un extérieur dudit véhicule (10) à travers ladite vitre,
dans lequel ledit élément chauffant (100) est configuré pour chauffer ladite partie de verre d'imagerie (FGC), moyennant quoi l'élément chauffant (100) est configuré pour appliquer une quantité par surface unitaire de chaleur à une partie spécifique en amont de ladite partie de verre d'imagerie supérieure à une quantité par unité de surface de chaleur que l'élément chauffant (100) est configuré pour appliquer à une partie en aval de ladite partie de verre d'imagerie (FGC), ladite partie spécifique en amont étant situé en amont dans une direction d'écoulement de liquide dans laquelle, lors de l'utilisation, le liquide s'écoule sur une surface à l'extérieur de ladite cabine de véhicule de ladite partie de verre d'imagerie (FGC) et ladite partie en aval étant située en aval de ladite partie spécifique en amont dans ladite direction d'écoulement de liquide, **caractérisé en ce que**
l'appareil de chauffage comprend en outre un capteur de vitesse de véhicule (61) configuré pour détecter une vitesse de véhicule dudit véhicule (10) ;
dans lequel :
ledit élément chauffant (100) comprend un premier élément chauffant (101) et un deuxième élément chauffant (102) ; et
ladite unité de contrôle (60) est configurée pour contrôler ladite alimentation électrique fournie audit chauffage (100), de manière à :
fournir une alimentation électrique au premier élément chauffant (101) pour chauffer la totalité ou une partie d'une partie supérieure, comme ladite partie spécifique en amont, lorsque la vitesse du véhicule est égale ou inférieure à une vitesse de véhicule seuil, dans lequel ladite partie d'imagerie est divisée en deux parties dans une direction verticale le long de ladite vitre, lesdites deux parties incluant une partie supérieure et une partie inférieure ; et
fournir une alimentation électrique au deuxième élément chauffant (102) pour chauffer la totalité ou une partie de ladite partie inférieure, comme ladite partie spécifique en amont, lorsque la vitesse du véhicule est plus élevée que la vitesse de véhicule seuil.

2. Appareil de chauffage selon la revendication 1,
dans lequel
ledit élément chauffant (100) est configuré pour être capable de chauffer ladite totalité de ladite partie particulière.

3. Appareil de chauffage selon la revendication 2,
dans lequel
ledit élément chauffant (100) peut être étroitement fixé à une surface latérale de la cabine de véhicule de ladite totalité de ladite partie particulière.

4. Appareil de chauffage selon la revendication 2,
dans lequel
ledit élément chauffant (90) est jetable au niveau d'une partie capot (31a) qui s'étend vers l'avant sous ladite caméra embarquée (30) dans ledit espace intérieur dudit véhicule (10) de manière à faire face à ladite partie de verre d'imagerie (FGC).
